# EUROPEAN PATENT SPECIFICATION

(11) **EP 2 824 946 B1**
(45) Date of publication and mention of the grant of the patent: **13.01.2016**
(21) Application number: 13758412.4
(22) Date of filing: 04.02.2013
(51) Int. Cl.: H04W 4/00, H04W 4/20

(54) **METHOD AND DEVICE FOR PROVIDING USER INFORMATION, AND COMPUTER STORAGE MEDIUM**
VERFAHREN UND VORRICHTUNG ZUR BEREITSTELLUNG VON BENUTZERINFORMATIONEN UND COMPUTERSPEICHERMEDIUM
PROCÉDÉ ET DISPOSITIF DE FOURNITURE D'INFORMATIONS D'UTILISATEUR, ET SUPPORT DE MÉMORISATION D'ORDINATEUR

(30) Priority: 08.03.2012 CN 201210059874; 08.03.2012 CN 201210059851
(43) Date of publication of application: 14.01.2015
(73) Proprietor: TENCENT TECHNOLOGY (SHENZHEN) COMPANY LIMITED, Guangdong 518044 (CN)
(72) Inventor: ZHONG, Rui, Shenzhen Guangdong 518044 (CN); DONG, Xijun, Shenzhen Guangdong 518044 (CN); LIAN, Han, Shenzhen Guangdong 518044 (CN); LIU, Yu, Shenzhen Guangdong 518044 (CN); MENG, Jinfeng, Shenzhen Guangdong 518044 (CN); TAO, Yucao, Shenzhen Guangdong 518044 (CN); WANG, Boqiang, Shenzhen Guangdong 518044 (CN); WANG, Wei, Shenzhen Guangdong 518044 (CN); YU, Jun, Shenzhen Guangdong 518044 (CN); ZHENG, Chunlei, Shenzhen Guangdong 518044 (CN); ZHOU, Tao, Shenzhen Guangdong 518044 (CN)
(74) Representative: EP&C
(86) International application number: PCT/CN2013/071326
(87) International publication number: WO 2013/131423

(56) References cited:
- CN-A- 1 766 873
- CN-A- 101 726 312
- CN-A- 101 808 001
- CN-A- 102 053 976
- US-A1- 2011 047 182
- US-A1- 2011 106 719
- US-A1- 2012 054 035

## Description

### Field of the Technology

The disclosure relates to network communication technologies, and particularly relates to a POI-based method for providing user information, a device for providing user information, and a corresponding computer storage medium.

### Background

Social contact application is one of the most extensive applications in a mobile terminal such as a mobile phone, a tablet PC, etc.

When a user uses the social contact application, one of the most commonly used functions is to provide a user with information on other strangers, and allow the user to selectively add part of the strangers as friends. In the realization of the function, an important part is that how a mobile terminal provides the user with the information on other strangers. A method of providing user information, which uses existing technologies, mainly includes the following steps. First, a server tracks user position information of a user holding a mobile terminal in real time. Second, when a first user enters a certain range set by a second user, the information of the first user is provided to the second user through the mobile terminal, so that the second user can add the first user as a friend.

In the process of realizing the disclosure, a server requires a lot of system resources when the server makes real-time tracking of position information of each user. Second, when the information of the first user is provided to the second user, the provision is only related to the range set by the second user. It may be possible that the first user provided by the mobile terminal is likely not to be a stranger in which the second user is really interested, that is, the first user provided may have poor attraction to the second user, and eventually the possibility that the first user is added as a friend of the second user is small.

US 2011106719 A1 relates to a method for matching mobile device users. The match server defines a plurality of living community regions, living community reference points, primary interest classes and detail interest classes, receives position coordinates from the mobile device, and defines a living community range of the mobile device user and infers the point of interest (POI) of the mobile device user based on the received position coordinates. Moreover, the match server generates a match list based on the living community ranges, the POIs and the personal profiles of the mobile device user and the other mobile device users, and transmits the match list to the mobile device.

### Summary

In order to reduce resource occupancy and provide users with user information in which the users are more interested, embodiments of the disclosure provide a method of providing user information and a device for providing user information. The technical solutions of the embodiments are as follows.

According to one aspect of the disclosure, an embodiment of the disclosure provides a method for providing user information, including:
acquiring information relating to user position of a user;
acquiring a point of interest associated with the user position;
acquiring other users who have performed registration on the point of interest within a predetermined time period; and
providing information of the other users to the user.

According to another aspect of the disclosure, an embodiment of the disclosure also provides a device for providing user information, including:
a position acquiring module, to acquire information relating to user position of a user;
a POI acquiring module, to acquire a point of interest associated with the user position;
a user acquiring module, to acquire other users who have performed registration on the point of interest within a predetermined time period;
an information providing module, to provide information of the other users to the user;
wherein the registration includes: associating user identification information, registration time, and registered POI information of a registration initiating user to generate registration information.

According to another aspect of the disclosure, an embodiment of the disclosure also provides a computer storage medium for storing executable instructions of a computer, wherein the executable instructions of the computer are configured to control the computer to implement a method of providing user information, wherein the method includes:
acquiring user position information of a user;
acquiring a point of interest associated with the user position;
acquiring other users who have registered on the point of interest within a predetermined time period; and
providing information of the other users to the user.

According to another aspect of the disclosure, an embodiment of the disclosure also provides a method for providing user information, including:
receiving registration of a user on a point of interest;
acquiring other points of interest associated with the point of interest;
acquiring other users registered on the point of interest and the other points of interest within a predetermined time period; and
providing information of the other users to the user, or providing information of the user to the other users.

According to another aspect of the disclosure, an embodiment of the disclosure also provides a device for providing user information, including:
a POI registering module, to receive registration from a user;
a first acquiring module, to acquire other points of interest associated with the point of interest;
a user acquiring module, to acquire other users which have registered on the point of interest and the other points of interest within a predetermined time period; and
an information providing module, to provide information of the other users to the user, or provide information of the user to the other users.

According to another aspect of the disclosure, an embodiment of the disclosure also provides a computer storage medium for storing executable instructions of a computer, wherein the executable instructions of the computer are configured to control the computer to implement a method of providing user information, wherein the method includes:
receiving registration of a user on a point of interest;
acquiring other points of interest associated with the point of interest;
acquiring other users who have registered on the point of interest and the other points of interest within a predetermined time period; and
providing information of the other users to the user, and providing information of the user to the other users.

The embodiments of the disclosure may provide beneficial effects as follows.

On one hand, an active user is provided with information of other users selected according to points of interest, so that the other users provided to the active user are those users closely associated with the geographic location of the active user or associated with the points of interest which the active user is interested in. In other words, the selected users are users which the active user is more interested in. The active user may acquire more useful information through communications with these users, and get to know friends with same hobbies or interests. That is, other users selected out under this technical solution may highly fit with the active user in terms of hobbies, interests and other aspects. On the other hand, under this technical solution, a server is not needed to make real-time tracking of a position of each user, and the position of each user is identified based on registration information generated in the process of registration on the points of interest, thereby less resource is required.

### Brief Description of Drawings

In order to more clearly describe technical solutions of the embodiments, a simple introduction of attached figures needed in description of the embodiments is made below. Obviously, the attached figures described below are only some embodiments of the disclosure. To those skilled in the art, on the premise of not contributing creative efforts, they can obtain other figures according to these attached figures.
FIG. 1 is a flow chart of a method of providing user information according to Embodiment 1 of the disclosure;
FIG. 2 is a flow chart of a method of providing user information according to Embodiment 2 of the disclosure;
FIG. 3 is a schematic diagram for implementing a method of providing user information according to Embodiment 2 of the disclosure;
FIG. 4 is a structure block diagram illustrating a device for providing user information according to Embodiment 3 of the disclosure;
FIG. 5 is a flow chart of a method of providing user information according to Embodiment 4 of the disclosure;
FIG. 6 is a flow chart of a method of providing user information according to Embodiment 5 of the disclosure;
FIG. 7 is a structure block diagram illustrating a device for providing user information according to Embodiment 6 of the disclosure.

### Detailed Description of the Disclosure

In order to better clarify the purpose, technical solutions and advantages of the disclosure, the embodiments of the disclosure are further described in detail below in combination with the attached figures.

### Embodiment 1

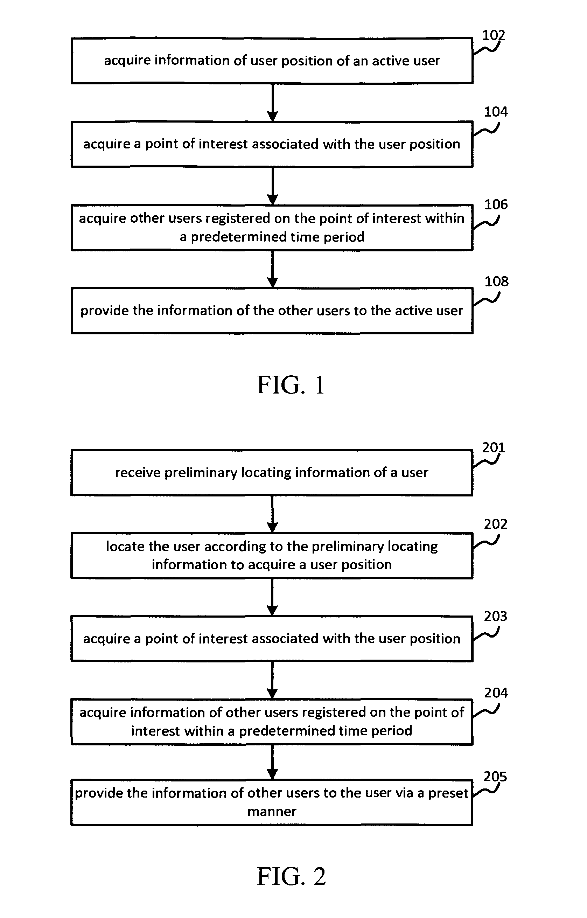

FIG. 1 may be referred to, which shows the flow chart of a method of providing user information according to Embodiment 1 of the disclosure. The method of providing user information can be used in a server which may interact with multiple mobile terminals. The method of providing user information includes the following steps.

Step 102: Acquire information of a user position of an active user.

In case of the need to provide information of other users to the active user, the server can firstly acquire position information of the active user. For example, the active user, via a mobile terminal, sends a query request on searching for other users. The query request includes locating information provided by the mobile terminal. After receiving the query request, the server can obtain the position information of the active user according to the locating information. The user position mentioned herein usually refers to information on longitude and latitude where the active user is. The specific process for acquiring the information can be implemented by a GPS positioning module in the mobile terminal used by the active user, and the information is attached to the query request and passed to the server. The process can also be completed by the server according to relevant gateway information obtained when the mobile terminal used by the active user has access to a mobile network.

Step 104: Acquire point of interests (POIs) associated with the user position.

After acquiring the user position information of the active user, the server can continue to obtain points of interest associated with the user's position. A POI is a kind of data relating to geographic location. Usually, each POI includes information in four aspects: name, category, longitude, and latitude. For example, a specific POI may include: name: "Tongfu Hotel", category: "Catering service", longitude: "XX, XX", latitude: "YY, YY". After obtaining the user position information of the active user, the server can obtain POIs associated with the user position information of the active user. For example, the serve can obtain a plurality of POIs having a distance with the active user identified by the user position information less than a predetermined scope. In an example, after acquiring the user position information of the active user, the server can obtain all other POIs within 200 meters around the user position of the active user.

Step 106: Acquire information of other users which have registered on a POI within a predetermined time period.

After obtaining one or more POIs associated with the user's location, the server can continue to obtain other users which have registered on these POIs within a predetermined time period, wherein the "registration" mainly refers to an operation which associates user identification information, registration time and registered POI information of a registration initiating user to generate registration information. For example, when User A has a meal at Tongfu Hotel at 14:59 p.m. on February 8, 2012, User A may register on the POI "Tongfu Hotel" via a mobile terminal. The mobile terminal can store "User A", "2012/2/8 14:59" and "Tongfu Hotel" as a piece of registration information. In a specific application, the "registration" may adopt other names such as Foot printing, Sign-in, Gold prospecting, or Name signing. In order to obtain other users which may be as useful as possible, the "predetermined time period" may last a short period of time, such as 30 seconds, 5 minutes, or the like. During a registration process, the user can also add a message, a comment or other information into the registration information.

For example, POI points associated with a user's location obtained in Step 104 may include: a POI point "Automatic service area of Bank of China at XX Street", a POI point "Kedi Supermarket", and a POI point "Century Cartoon Game Center". A server may continue to, within 5 minutes, obtain other users having registered on the POI point "Automatic service area of Bank of China at XX Street", the POI point "Kedi Supermarket", and the POI point "Century Cartoon Game Center". The registrations of these users may include: User B registering at the POI point "Automatic service area of Bank of China at XX Street" at 14:57 p.m., User C registering at the POI point "Century Cartoon Game Center" at 14:59 p.m. and attaching a message "I have passed the second pass of Taiko Drum Master", and User D registering at the POI point "Kedi Supermarket" and adding a comment "The butter bread in this Kedi Supermarket is very delicious."

Step 108: Provide information of other users to the active user.

After acquiring other users such as User B and User C, the server may provide the information of User B and User C to the active user. The information provided by the server normally includes at least user identification information and registered POI information, and may also include the information which can be provided such as registration time. For example, when the information on User B is provided to active User A, the information of User B may include user identification information "User B", registered POI information "Automatic service area of Bank of China at XX Street" and registered time "14:57". Other information which can be provided may include messages, comments and information left by other users at time of registration. For example, when the information on User C is provided to active User A, the information on User C may include user identification information "User C", registered POI information "Century Cartoon Game Center", and message information left at time of registration "A user who recharges 100 game currency will be given another 100 game currency as a present !>_<!". When the information on other users is provided to the active user, the terminal of the active user can be used, and a plurality of ways can be adopted. The ways may be audio, video, text, short message, or a combination thereof.

In conclusion, on one hand, through using the method for providing user information according to Embodiment 1 of the disclosure, an active user is provided with information of other users selected according to points of interest, so that the other users provided to the active user are those who are closely associated with the geographic location of the active user or associated with the points of interest which the active user is interested in. In other words, the selected users are users which the active user is more interested in. The active user may acquire more useful information through communications with these users, and get to know friends with same hobbies or interests. That is, other users selected out under this technical solution fit highly with the active user in terms of hobbies, interests and other aspects. On the other hand, under this technical solution, a server is not needed to make real-time tracking of the position of each user, and the position of each user is identified based on the registration information generated in the process of registering points of interest, thereby lessening the resources required.

### Embodiment 2

FIG. 2 is referred to hereinafter, which shows a flow chart of a method of providing user information according to Embodiment 2 of the disclosure. The method of providing user information can be used in a server which may interact with multiple mobile terminals. The method of providing user information includes the following steps.

Step 201: Receive preliminary locating information of a user.

An active user can send a query request on searching for other users via a mobile terminal. After receiving the query request, a server can obtain the user position information of the active user. The user position mentioned herein usually refers to information on longitude and latitude where the active user is. In some embodiments, a GPS positioning module in the mobile terminal used by the active user can firstly make positioning to obtain the position information of the active user, that is, the position information on longitude and latitude where the active user is, and then the information is attached to the query request and passed to a server. In other words, the server may receive from a user a query request which may directly include user position information of an active user. The server can parse the query request to directly obtain the user position of the active user. However, in most embodiments such as this embodiment, an active user can send a query request on searching for other users via a mobile terminal. The query request may only include preliminary locating information which may be gateway information obtained when the mobile terminal used by the active user has an access to a mobile network, or may be base station information of a mobile communication network community where the mobile terminal used by the active user is.

Step 202: Obtain user position information of a user according to preliminary locating information.

The server can make positioning to obtain the information on the position of a user according to the received preliminary locating information. Specifically, after receiving the query request, the server can parse the query request and get the preliminary locating information which may be gateway information obtained when the mobile terminal used by the active user has access to a mobile network, or other information which can represent the user position of the active user. Under the support of a Geographic Information System (GIS) platform, the server may convert the preliminary locating information to information on latitude and longitude, thus obtaining the user position of the active user.

Step 203: Obtain POIs associated with the user position.

After acquiring the user position information of the active user, the server can continue to obtain POIs associated with the user's position. After acquiring the user position information of the active user, the server can continue to obtain POIs associated with the active user's position. For example, the server can obtain a plurality of POIs having distance with the position of the active user less than a predetermined range. In an example, after acquiring the user position information of the active user, the server can obtain all other POIs within 200 meters around the user position of the active user. It should be noted that, the "POIs associated with the user's position" mentioned herein may be points of interest relating to geographical position of the user, or may be other points of interest relating to the user's geographical position or other aspects. For example, in another embodiment, the active user may be preset to provide an associated category "Catering service". When the server obtains POIs relating to the user position, the server can obtain all POIs under the category of "Catering service" within 200 meters around the user position of the active user.

Step 204: Obtain other users which have registered on the POI within a predetermined time period.

After obtaining one or more POIs associated with the user's position, the server can continue to obtain other users which have registered on these POIs within a predetermined time period. The "registration" mainly refers to an operation which associates user identification information, registration time and registered POI information of a registration initiating user, to generate registration information. For example, when User A has a meal at Tongfu Hotel at 14:59 p.m. on February 8, 2012, User A may register on the POI of Tongfu Hotel via a mobile terminal. The mobile terminal can store "User A", "2012/2/8 14:59" and "Tongfu Hotel" as a piece of registration information. In a specific application, the "registration" herein may adopt other names such as Foot printing, Sign-in, Gold prospecting, and Name signing. In order to find other users which may be as useful as possible, the "predetermined time period" herein generally lasts a short period of time, such as 30 seconds, 5 minutes, and the like. During a registration process, the user can also add a message, a comment or other information into the registration information.

For example, after POIs associated with a user's location are obtained in Step 203, which include: a POI of "Automatic service area of Bank of China at XX Street", a POI of "Kedi Supermarket", and a POI of "Century Cartoon Game Center", a server may continue to, within 5 minutes, obtain other users having registered on the POI of "Automatic service area of Bank of China at XX Street", the POI of "Kedi Supermarket", and the POI of "Century Cartoon Game Center". These users having registered on the POIs may include: User B registering at the POI of "Automatic service area of Bank of China at XX Street" at 14:57 p.m., User C registering at the POI of "Century Cartoon Game Center" at 14:59 p.m. and attaching a message "I have passed the second pass of Taiko Drum Master", and User D registering at the POI of "Kedi Supermarket" and adding a comment "The butter bread in this Kedi Supermarket is very delicious."

Step 205: Provide other user's information to the active user through a predetermined way.

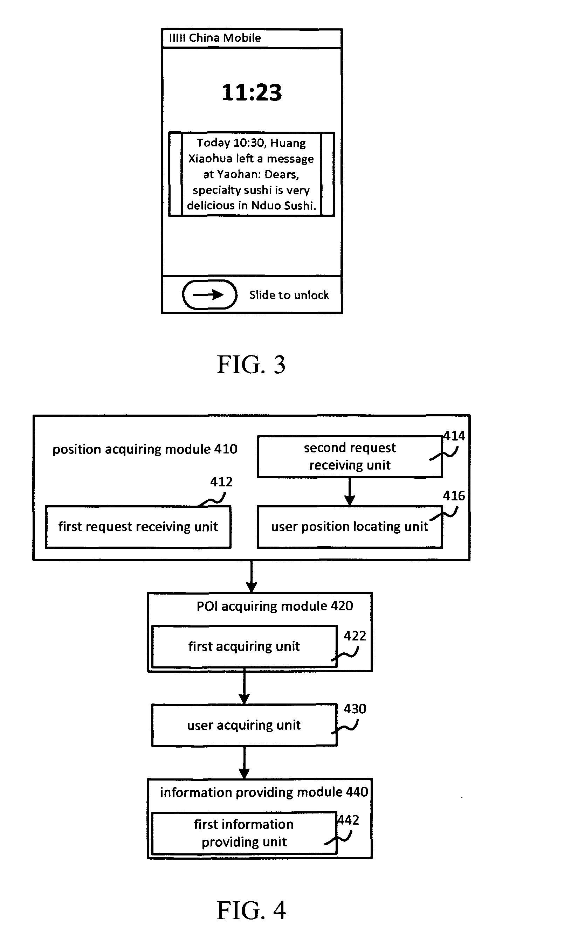

After acquiring the information on other users such as User B and User C, the server may provide the information of User B and User C to the active user. The information provided by the server normally includes at least user identification information and registered POI information, and may also include the information to be provided such as a registration time. For example, when the information on User B is provided to active User A, the information of User B may include user identification information "User B", registered POI information "Automatic service area of Bank of China at XX Street" and registered time "14:57". Other information to be provided may include messages, comments, and information left by other users at time of registration. For example, when the information on User C is provided to active User A, the information on User C may include user identification information "User C", registered POI information "Century Cartoon Game Center", and message information left at time of registration "A user who recharges 100 game currency will be given another 100 game currency as a present !>_<!". When the information on other users is provided to the active user, the terminal of the active user can be used, and a plurality of ways can be adopted. The ways may be audio, video, text, short message, or a combination thereof. For example, the information on other users is provided to the active user through a combination of short message and prompt tone. In a specific application, a prompt tone of a short message may be played firstly, then a prompt box on the short message pops up. The contents in the prompt box is such as "At 10:30 o'clock today, Huang Xiaohua left a message at Yaohan: Dears, specialty sushi is very delicious in Nduo Sushi", as shown in FIG. 3. In the prompt box, "10:30" is a registration time, "Huang Xiaohua" is user identification information, "Yaohan" is information on a registered interest point, and "Dears, specialty sushi is very delicious in Nduo Sushi" is the message information left by the user at time of registration.

Obviously, after obtaining the information of these other users, the active user may view messages or comments interesting him according to his own hobbies and interests, thus knowing nearby other points of interest or something which interest him. The active user may send information to a user which the active user is interested in. For example, after active User A sees the message left by Huang Xiaohua, the active user may send to Huang Xiaohua a short message "Which district of Yaohan is Nduo Sushi in?". If active User A exchanges with Huang Xiaohua happily, they can further add each other as friends.

In conclusion, on one hand, through using the method for providing user information according to Embodiment 2 of the disclosure, an active user is provided with information of other users selected according to points of interest, so that the other users provided to the active user are those users closely associated with the geographic location of the active user or associated with the points of interest the active user is interested in. In other words, the selected users are those the active user is more interested in. The active user may acquire more useful information through communications with these users, and get to know friends with same hobbies or interests. That is, other users selected out under this technical solution fit highly with the active user in terms of hobbies, interests and other aspects. On the other hand, under the method of providing user information, a server is not needed to make real-time tracking of the position of each user, and the position of each user is identified based on the registration information generated in the process of registering points of interest. In this way, less resource is required.

### Embodiment 3

Please refer to FIG. 4, which shows a structure block diagram of a device for providing active user's information according to Embodiment 3 of the disclosure. The device for providing user information may be a server which can interact with a plurality of mobile terminals. The device for providing user information includes: a position acquiring module 410, a POI acquiring module 420, a user acquiring module 430, and an information providing module 440.

The position acquiring module 410 is configured to acquire information relating to user position of an active user. The position acquiring module 410 may include a first request receiving unit 412, configured to receive the information relating to the user position of the active user. The position acquiring module 410 may also include a second request receiving unit 414, and a user position locating unit 416. The second request receiving unit 414 is configured to receive preliminary locating information of a user, and the user position locating unit 416 is configured to make positioning to obtain the information on the position of the active user according to the preliminary locating information in a query request received by the second request receiving unit 414.

The POI acquiring module 420 is configured to obtain POIs associated with user's position information acquired by the position acquiring module 410. The POI acquiring module 420 may include a first acquisition module 422. The first acquisition module 422 is configured to acquire at least one point of interest having distance with the user position obtained by the position acquiring module 410 less than a predetermined range, as a point of interest associated with the aforesaid user position.

The user acquiring module 430 is configured to acquire other users which have registered on POIs obtained by the POI acquiring module 420 within a predetermined time period. Herein, the "registration" mainly refers to an operation which associates user identification information, registration time and registered POI information of a registration initiating user, and generates registration information based on the aforesaid information.

The information providing module 440 is configured to provide an active user with the information on other users obtained by the user acquiring module 430.

The information providing module 440 may include a first information providing unit 442. The first information providing unit 442 is configured to provide the active user with other user's information obtained by the user acquiring module 430 through a predetermined way. The other user's information may include user identification information and registered POI information. The predetermined way may be audio, video, text, short message, or a combination thereof.

In conclusion, on one hand, through using the method for providing user information according to Embodiment 3 of the disclosure, an active user is provided with information of other users selected according to points of interest, so that the other users provided to the active user are those users which are closely associated with the geographic location of the active user or associated with the points of interest which the active user is interested in. In other words, the selected users are users which the active user is more interested in. The active user may acquire more useful information through communications with these users, and get to know friends with same hobbies or interests. That is, other users selected out under this technical solution fit highly with the active user in terms of hobbies, interests and other aspects. On the other hand, through using the device for providing user information, a server is not needed to make real-time tracking of the position of each user, and the position of each user is identified based on the registration information generated in the process of registering points of interest, thereby less resource is required.

It should be noted that when the device for providing user information according to the above embodiment is described in Embodiment 3, the aforesaid functional modules are illustrated by an example. In a practical application, the allocation of the aforesaid functions can be completed by different functional modules. That is, the internal structure of the device may be divided into different functional modules to complete all or part of the functions described above. In addition, the device for providing user information according to the aforesaid embodiment has the same conception as the embodiment for the method of providing user information. The specific execution process is shown in the embodiment for the method of providing user information, which is not described repeatedly herein.

### Embodiment 4

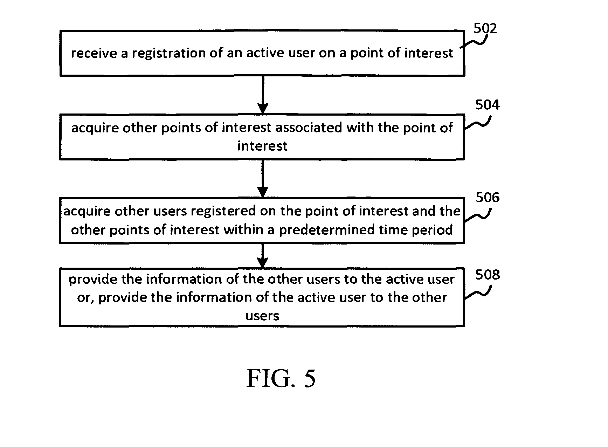

Please refer to FIG. 5, which shows the flow chart of a method of providing user information according to Embodiment 4 of the disclosure. The method of providing user information can be used in a server which may interact with multiple mobile terminals. The method of providing user information includes:
Step 502: Receive the registration of an active user on a POI.

A point of interest (POI) is a kind of data relating to geographic location. Each POI usually includes information in four aspects: name, category, longitude, and latitude. For example, a specific POI may include: name: "Tongfu Hotel", category: "Catering service", longitude: "XX, XX", latitude: "YY, YY". The POI is generally combined with map, positioning and other services to form an application program to be used by one or more users. When a user uses a mobile terminal including a POI-related application program, the user can register at a POI. The "registration" mainly refers to an operation which associates registered POIs, registration time and user identification information of a registration initiating user, and takes the aforesaid information as registration information. For example, when User A has a meal at Tongfu Hotel at 14:59 p.m. on February 8, 2012, User A may register on the POI of Tongfu Hotel via a mobile terminal. The mobile terminal can store "User A", "2012/2/8 14:59" and "Tongfu Hotel" as a piece of registration information. In a specific application, the "registration" herein may adopt other names such as Foot printing, Sign-in, Gold prospecting, and Name signing. During a registration process, the user can also add a message, a comment or other information into the registration information.

Step 504: Obtain other POIs associated with this POI.

After the active user registers on a point of interest, the server can acquire other POIs associated with this registered point of interest. For example, after the active user registers on the POI "Tongfu Hotel", the server can obtain all other POIs within 200 meters around the POI "Tongfu Hotel". For another example, after the active user registers on the POI "Tongfu Hotel", the server can obtain other POIs under the category "Catering service" within 300 meters around the POI "Tongfu Hotel".

Step 506: Obtain other users which have registered on the POI and other POIs within a predetermined time period.

After acquiring other POIs, the server can continue to obtain other users which have registered on the POI and these other POIs within a predetermined time period. In order to obtain other users which may be as useful as possible, the "predetermined time period" herein generally lasts short time such as 30 seconds, or 5 minutes. For example, POIs associated with the POI "Tongfu Hotel" obtained in Step 104 may include: a POI "Automatic service area of Bank of China at XX Street", a POI "Kedi Supermarket", and a POI "Century Cartoon Game Center". A server may continue to, within 5 minutes, obtain other users having registered on the POI "Automatic service area of Bank of China at XX Street", the POI "Kedi Supermarket", and the POI "Century Cartoon Game Center". These users having registered at the POIs may include: User B registering at the POI "Automatic service area of Bank of China at XX Street" at 14:57 p.m., User C registering at the POI "Century Cartoon Game Center" at 14:59 p.m. and attaching a message "I have passed the third pass of Taiko Drum Master", and User D registering at the POI point "Kedi Supermarket" and adding a comment "The butter bread in this Kedi Supermarket is very delicious."

Step 508: Provide the other user's information to the active user, or provide the active user's information to other users.

After acquiring other users such as User B and User C, the server may provide the information of User B and User C to the active user, and may also provide the information of the active user to other users: User B and User C. The information provided by the server normally includes at least user identification information and registered POI information, and may also include the information which can be provided such as registration time. For example, when the information on User B is provided to active User A, the information of User B may include user identification information "User B", registered POI information "Automatic service area of Bank of China at XX Street" and registered time "14:57". Other information which can be provided may include messages, comments and other information left by other users at time of registration. For example, when the information on User C is provided to active User A, the information on User C may include user identification information "User C", registered POI information "Century Cartoon Game Center" and message information left at time of registration "A user who recharges 100 game currency will be given another 100 game currency as a present !>_<!". When the information on other users is provided to the active user, the terminal of the active user can be used, and a plurality of ways can be adopted. The ways may be audio, video, text, short message, or a combination thereof. It is easy to understand that, the process of providing the information of the active user to other users is the same as or similar to the process of providing the information on other users to the active user, which is not described repeatedly hereinafter.

In conclusion, on one hand, through using the method for providing user information as provided in Embodiment 4 of the disclosure, an active user is provided with information of other users selected according to points of interest, so that the other users provided to the active user are those users which are closely associated with the geographic location of the active user or associated with the points of interest which the active user is interested in. In other words, the selected users are users which the active user is more interested in. The active user may acquire more useful information through communications with these users, and get to know friends with same hobbies or interests. That is, other users selected out under this technical solution fit highly with the active user in terms of hobbies, interests and other aspects. On the other hand, under the method of providing user information as provided in Embodiment 4 of the disclosure, a server is not needed to make real-time tracking of the position of each user, and the position of each user is identified based on the registration information generated in the process of registering points of interest, thereby less resource is required.

### Embodiment 5

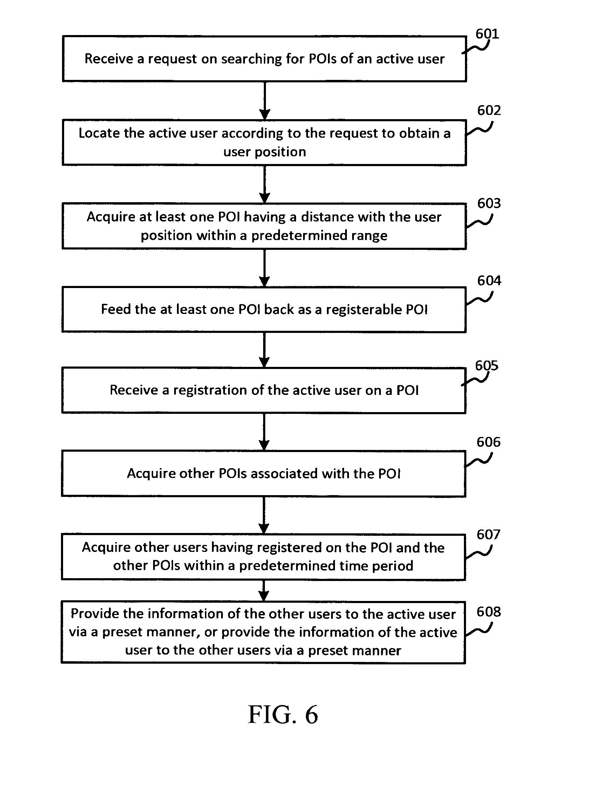

Please refer to FIG. 6, which shows the flow chart of a method of providing user information according to Embodiment 5 of the disclosure. The method of providing user information can be used in a server which may interact with multiple mobile terminals. The method of providing user information includes:
Step 601: Receive a request on searching for POIs of an active user.

After the active user uses a mobile terminal, the active user may send a request on searching for POIs to a server via this mobile terminal.

Step 602: The server makes positioning of the active user according to the request to obtain user position of the active user.

The server makes positioning to obtain the information on the position of the active user. There are multiple ways for positioning. For example, the mobile terminal adds GPS locating information of the active user to this request, and the server can determine the position of the active user according to the GPS locating information of the active user. For another example, after the server receives from the mobile terminal the request which includes gateway address information obtained when the mobile terminal has access to a mobile network, the server can determine the position of the active user according to the gateway address.

Step 603: Obtain at least one point of interest having a distance with the user position less than a predetermined range.

After the server acquires the user position of the active user, the server can acquire a plurality of POIs having the distance with user's location less than the predetermined range. For example, the user position of the active user acquired by the server is: longitude xx.xx, latitude yy.yy, then according to the longitude and latitude of the user's location and the longitude and latitude of each POI, the server can obtain all POIs not more than 2km away from the user's location.

Step 604: Obtain the at least one POI as a registerable POI, and feed it back to the active user.

After the server obtains a plurality of POIs, the server may feed these POIs back to the active user as registerable POIs for review and selection.

Step 605: Receive the registration of a user on a POI.

The active user can select a POI from the registerable POIs and register on the POI. The "registration" mainly refers to an operation which associates registered POIs, registration time and user identification information of a registration initiating user, and generates registration information according to the aforesaid information. For example, when User A has a meal at Tongfu Hotel at 14:59 p.m. on February 8, 2012, User A may register on the POI of Tongfu Hotel via a mobile terminal. The mobile terminal can store "User A", "2012/2/8 14:59" and "Tongfu Hotel" as a piece of registration information. In a specific application, the "registration" herein may adopt other names such as Foot printing, Sign-in, Gold prospecting, and Name signing. During a registration process, the user can also add a message, a comment or other information into the registration information.

Step 606: Obtain other POIs associated with this POI.

After the active user registers on a point of interest, the server can acquire other POIs associated with this registered point of interest. The association may be in terms of geographical location, category, keywords, etc. Specific explanation is given below.

The server can obtain at least one point of interest having distance with the registered POI less than a predetermined scope, as another POI associated with the registered POI. For example, after the active user registers on the POI "Tongfu Hotel", the server can obtain all other POIs within 200 meters around the POI "Tongfu Hotel".

The server can obtain at least one point of interest under the same category as the registered POI and having distance with the registered POI less than a predetermined scope, as another POI associated with the registered POI. For example, after the active user registers on the POI "Tongfu Hotel", the server can obtain other POIs under the category "Catering service" within 300 meters around the POI "Tongfu Hotel". For example, another POI may be a POI "Ancient Roman Hotel" or a POI "Fuhao Hotel".

Of course, the server may also obtain other POIs based on whether the names of POIs are associated, or other association modes, which are not described below.

Step 607: Obtain other users which have registered on the POI and other POIs within a predetermined time period.

After acquiring other POIs, the server can continue to obtain other users which have registered on the POI and these other POIs on which the active user registered within a predetermined time period. In order to obtain other users which may be as useful as possible, the "predetermined time period" herein generally lasts a short period of time such as 30 seconds, 5 minutes and the like. For example, POIs associated with the POI "Tongfu Hotel" obtained in Step 604 may include: a POI "Automatic service area of Bank of China at XX Street", a POI "Kedi Supermarket", and a POI "Century Cartoon Game Center". The server may continue to, within 5 minutes, obtain other users having registered on the POI "Automatic service area of Bank of China at XX Street", the POI "Kedi Supermarket", and the POI "Century Cartoon Game Center". The users having registered on the POIs may include: User B registering at the POI "Automatic service area of Bank of China at XX Street" at 14:57 p.m., User C registering at the POI "Century Cartoon Game Center" at 14:59 p.m. and attaching a message "I have passed the third pass of Taiko Drum Master", and User D which registers at the POI "Kedi Supermarket" and adds a comment "The butter bread in this Kedi Supermarket is very delicious."

Step 608: Provide the other user's information to the active user through a predetermined way, or provide the active user's information to other users through a predetermined way.

After acquiring other users such as User B and User C, the server may provide the information of User B and User C to the active user, and may also provide the information of the active User A to other users, i.e., User B and User C. The information provided by the server normally includes at least user identification information and registered POI information, and may also include the information which can be provided such as registration time. For example, when the information of User B is provided to active User A, the information of User B may include user identification information "User B", registered POI information "Automatic service area of Bank of China at XX Street" and registered time "14:57". Other information which can be provided may include messages, comments and information left by other users at time of registration. For example, when the information on User C is provided to active User A, the information on User C may include user identification information "User C", registered POI information "Century Cartoon Game Center" and message information left at time of registration "A user who recharges 100 game currency will be given another 100 game currency as a present !>_<!". When the information on other users is provided to the active user, the terminal of the active user can be used, and a plurality of ways may be adopted. The ways may be audio, video, text, short message, or a combination thereof. For example, the information on other users is provided to the active user through a combination of short message and prompt tone. In a specific application, a prompt tone of short message may be played firstly, then a prompt box for the short message pops up. The contents in the prompt box is such as "At 10:30 o'clock today, Huang Xiaohua left a message at Yaohan: Dears, specialty sushi is very delicious in Nduo Sushi", as shown in FIG. 3. In the message, "10:30" is a registration time, "Huang Xiaohua" is user identification information, "Yaohan" is information on a registered interest point, "Dears, specialty sushi is very delicious in Nduo Sushi" is the message information left by the user at the time of registration. It is easy to understand that, the process of providing the information of the active user to other users is the same as or similar to the process of providing the information on other users to the active user, which is not described repeatedly hereinafter.

Obviously, after obtaining the information of these other users, the active user may view messages or comments interesting him according to his own hobbies and interests, thus knowing nearby other points of interest or something which interest him. The active user may send information to the user which the active user is interested in. For example, after the active user sees the message left by Huang Xiaohua, the active user may send to Huang Xiaohua a short message "Which district of Yaohan is Nduo Sushi in?" If the active user exchanges with Huang Xiaohua happily, they can further add each other as friends.

In conclusion, on one hand, through using the method for providing user information according to Embodiment 5 of the disclosure, an active user is provided with information of other users selected according to points of interest, so that the other users provided to the active user are those users which are closely associated with interest on POIs registered by the active user, geographic location of the active user or the time of registration by the active user. In other words, the selected users are users which the active user is more interested in. The active user may acquire more useful information through communications with these users, and get to know friends with same hobbies or interests. That is, other users selected out under this technical solution fit highly with the active user in terms of hobbies, interests and other aspects. On the other hand, under the method of providing user information according to Embodiment 5 of the disclosure, a server is not needed to make real-time tracking of the position of each user, and the position of each user is identified based on the registration information generated in the process of registering points of interest, thereby less resource is required.

### Embodiment 6

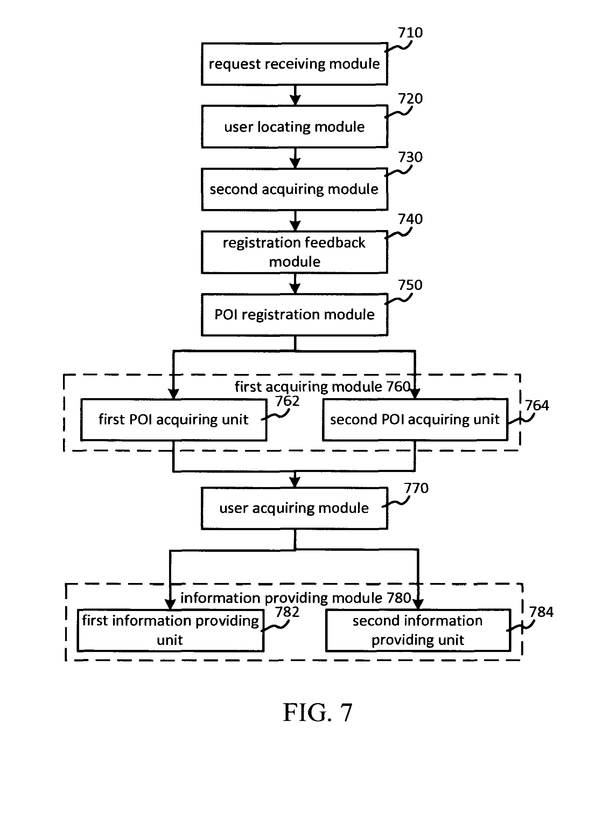

Please refer to FIG. 7, which shows a structure block diagram for a device for providing active user's information according to Embodiment 3 of the disclosure. The device for providing user information may be a server which can interact with a plurality of mobile terminals. The device for providing user information includes: a request receiving module 710, a user positioning module 720, a second acquisition module 730, a registration feedback module 740, a POI registering module 750, a first acquisition module 760, a user acquiring module 770, and an information providing module 780.

The request receiving module 710 is configured to receive a request of an active user on searching for POIs.

The user positioning module 720 is configured to make positioning of the active user to obtain the information on the position of the active user according to the request received by the request receiving module 710.

The second acquisition module 730 is configured to acquire at least one point of interest having distance with the user position obtained by the user positioning module 720 less than a predetermined scope.

The registration feedback module 740 is configured to take at least one POI obtained by the second acquisition module 730 as a registerable POI, and feed it back to the active user.

The POI registering module 750 is configured to receive a user's registration on a POI among at least one POI provided by the registration feedback module 440.

The first acquisition module 760 is configured to acquire other POIs associated with the POI registered via the POI registering module 750. The first acquisition module 760 may include a first POI acquiring unit 762, and/or a second POI acquiring unit 764. The first acquisition module 760 is configured to acquire at least one POI having distance with the POI registered via the POI registering module 750 less than a predetermined scope, as other POIs associated with the POI registered via the POI registering module 750. The second POI acquiring unit 764 is configured to acquire at least one point of interest under the same category as the registered POI and having distance with the aforesaid POI less than a predetermined scope, as other POI associated with the registered POI.

A user acquiring module 770 is configured to acquire other users which have registered on the POI registered via the POI registering module 750 and other POIs acquired by the first acquisition module 760 within a predetermined time period.

The information providing module 780 is configured to provide the information on the active user and other users acquired by the user acquiring module 770 to each other. That is, the information providing module 780 may provide the information on other users acquired by the user acquiring module 770 to the active user, or may provide the information on the active user to other users. The information providing module 780 may include a first information providing unit 782 and/or a second information providing unit 784. The first information providing unit 782 is configured to provide the information on the active user to other users acquired by the user acquiring module 770 through a predetermined way, wherein the information may include user identification information and registered POI information. The second information providing unit 784 is configured to provide the information on other users to the active user through a predetermined way, wherein the information may include user identification information and registered POI information.

In conclusion, on one hand, through using the device for providing user information according to Embodiment 6 of the disclosure, an active user is provided with information of other users selected according to points of interest, so that the other users provided to the active user are those users which are closely associated with the POI registered by the active user on interests, geographic location, or the time of registration. In other words, the selected users are users which the active user is more interested in. The active user may acquire more useful information through communications with these users, and get to know friends with same hobbies or interests. That is, other users selected out under this technical solution fit highly with the active user in terms of hobbies, interests and other aspects. On the other hand, under the device of providing user information according to Embodiment 6 of the disclosure, a server is not needed to make real-time tracking of the position of each user, and the position of each user is identified based on the registration information generated in the process of registering points of interest, thereby less resource is required.

Those persons having ordinary skill in the art can understand that all or part of the steps for achieving the above embodiments can be completed by hardware, and can be completed by programs instructing relevant hardware. The aforesaid programs can be stored in a computer readable storage medium, which may be ROM, disc, CD-ROM, etc.

The above are only better embodiments of the disclosure, and are not be configured to restrict the disclosure. Any modification, equivalent replacement, improvement and the like within the principle of the disclosure should be included in the protection scope of the disclosure.

## Claims

1. A method for providing user information, comprising:
acquiring (102) information relating to user position of a user;
acquiring (104) a point of interest associated with the user position;
acquiring (106) other users who have performed registration on the point of interest within a predetermined time period; and
providing (108) information of the other users to the user.

2. The method according to claim 1, wherein acquiring the point of interest associated with the user position comprises:
acquiring at least one point of interest having a distance with the user position less than a predetermined range as the point of interest associated with the user position.

3. The method according to claim 1, wherein providing the information of the other users to the user comprises:
providing the information of the other users to the user through a predetermined way;
wherein the information comprises user identification information and registered POI information; and
the predetermined way comprises at least one of the following ways including audio, video, text, and short message.

4. The method according to any of claims 1-3, wherein the registration comprises:
associating the user identification information, registration time and the registered POI information of a registration initiating user to generate registration information.

5. A device for providing user information, comprising:
a position acquiring module (410), configured to acquire information relating to user position of a user;
a POI acquiring module (420), configured to acquire a point of interest associated with the user position;
a user acquiring module (430), configured to acquire other users who have performed registration on the point of interest within a predetermined time period;
an information providing module (440), configured to provide information of the other users to the user;
wherein the registration comprises: associating user identification information, registration time, and registered POI information of a registration initiating user to generate registration information.

6. The device according to claim 5, wherein the POI acquiring module (420) comprises: a first acquiring unit (422);
wherein the first acquiring unit (422) is configured to acquire at least one point of interest having a distance with the user position less than a predetermined range as the point of interest associated with the user position.

7. A method for providing user information, comprising:
receiving (502) registration of a user on a point of interest;
acquiring (504) other points of interest associated with the point of interest;
acquiring (506) other users registered on the point of interest and the other points of interest within a predetermined time period; and
providing (508) information of the other users to the user, or providing information of the user to the other users.

8. The method according to claim 7, wherein acquiring the other points of interest associated with the point of interest comprises:
acquiring at least one point of interest having a distance with the point of interest less than a predetermined range as the other points of interest associated with the point of interest.

9. The method according to claim 7, wherein acquiring the other points of interest associated with the point of interest comprises:
acquiring at least one point of interest under the same category and having a distance with the point of interest less than a predetermined range as the other points of interest associated with the point of interest.

10. The method according to claim 7, wherein providing the information of the other users to the user, or providing the information of the user to the other users comprises:
providing the information of the other users to the user through a predetermined way, wherein the information includes user identification information and registered POI information;
or, providing the information of the user to the other users through a predetermined way, wherein the information includes user identification information and registered POI information;
wherein the predetermined way comprises at least one of audio, video, text, and short message.

11. The method according to claim 7, before receiving the registration of the user on the point of interest, further comprising:
receiving a request of the user on searching for POIs;
locating the user according to the request to obtain the user position;
acquiring at least one point of interest having the distance with the user position less than the predetermined range; and
obtaining the at least one point of interest as a registerable POI for feedback.

12. A device for providing user information, comprising:
a POI registering module (750), configured to receive registration from a user;
a first acquiring module (760), configured to acquire other points of interest associated with the point of interest;
a user acquiring module (770), configured to acquire other users which have registered on the point of interest and the other points of interest within a predetermined time period; and
an information providing module (780), configured to provide information of the other users to the user, or provide information of the user to the other users.

13. The device according to claim 12, wherein the first acquiring module (760) comprises: a first POI acquiring unit (762); and
the first POI acquiring unit (762) is configured to obtain at least one point of interest having a distance with the point of interest less than a predetermined range as the other points of interest associated with the point of interest.

14. The device according to claim 12, wherein the first acquiring module (760) comprises: a second POI acquiring unit (764); and
the second POI acquiring unit (764) is configured to acquire at least one point of interest under the same category and having a distance with the point of interest less than a predetermined range as the other points of interest associated with the point of interest.

15. The device according to claim 12, further comprising: a request receiving module (710), a user position locating module (720), a second acquiring module (730), and a registration feedback module (740);
wherein the request receiving module (710) is configured to receive a request of the user on searching for POIs;
the user position locating module (720) is configured to locate the user according to the request to obtain the user position;
the second acquiring module (730) is configured to obtain at least one point of interest having the distance with the user position less than the predetermined range; and
the registration feedback module (740) is configured to obtain the at least one point of interest as a registerable POI for feedback.

## Patentansprüche

1. Verfahren zum Bereitstellen von Nutzerinformation, wobei das Verfahren folgendes umfasst:
Erfassen (102) von Information in Bezug auf eine Nutzerposition von einem Nutzer;
Erfassen (104) eines Points of Interest, der der Nutzerposition zugeordnet ist;
Erfassen (106) von anderen Nutzern, die an dem Point of Interest innerhalb eines vorbestimmten Zeitraums eine Registrierung durchgeführt haben; und
Bereitstellen (108) von Information über die anderen Nutzer an den Nutzer.

2. Verfahren nach Anspruch 1, wobei das Erfassen des Points of Interest, der der Nutzerposition zugeordnet ist, folgendes umfasst:
Erfassen von mindestens einem Point of Interest, der eine Distanz zu der Nutzerposition hat, die geringer als ein vorbestimmter Bereich ist, als den Point of Interest, der der Nutzerposition zugeordnet ist.

3. Verfahren nach Anspruch 1, wobei das Bereitstellen der Information über die anderen Nutzer an den Nutzer folgendes umfasst:
Bereitstellen der Information über die anderen Nutzern an den Nutzer auf einem vorbestimmten Weg;
wobei die Information Nutzeridentifikationsinformation und Information über den registrierten POI umfasst; und
der vorbestimmte Weg mindestens einen der folgenden Wege umfasst, die Audio, Video, Text oder Kurznachricht umfassen.

4. Verfahren nach einem der Ansprüche 1 - 3, wobei die Registrierung folgendes umfasst:
Zuordnen der Nutzeridentifikationsinformation, der Registrierungszeit und der Information über den registrierten POI von einem die Registrierung initiierenden Nutzer, um Registrierungsinformation zu erzeugen.

5. Vorrichtung zum Bereitstellen von Nutzerinformation, wobei die Vorrichtung folgendes umfasst:
ein positionserfassendes Modul (410), das gestaltet ist, um Information in Bezug auf die Nutzerposition von einem Nutzer zu erfassen;
ein POI-erfassendes Modul (420), das gestaltet ist, um einen Point of Interest zu erfassen, der der Nutzerposition zugeordnet ist;
ein nutzererfassendes Modul (430), das gestaltet ist, um andere Nutzer zu erfassen, die an dem Point of Interest innerhalb eines vorbestimmten Zeitraums eine Registrierung durchgeführt haben;
ein informationsbereitstellendes Modul (440), das gestaltet ist, um Information über die anderen Nutzer an den Nutzer bereitzustellen;
wobei die Registrierung folgendes umfasst: Zuordnen der Nutzeridentifikationsinformation, der Registrierungszeit und der Information über den registrierten POI von einem die Registrierung initiierenden Nutzer, um Registrierungsinformation zu erzeugen.

6. Vorrichtung nach Anspruch 5, wobei das POI-erfassende Modul (420) folgendes umfasst: eine erste Erfassungseinheit (422);
wobei die erste Erfassungseinheit (422) gestaltet ist, um mindestens einen Point of Interest, der eine Distanz zu der Nutzerposition hat, die geringer als ein vorbestimmter Bereich ist, als den Point of Interest zu erfassen, der der Nutzerposition zugeordnet ist.

7. Verfahren zum Bereitstellen von Nutzerinformation, wobei das Verfahren folgendes umfasst:
Empfangen (502) von einer Registrierung von einem Nutzer an einem Point of Interest;
Erfassen (504) von anderen Points of Interest, die dem Point of Interest zugeordnet sind;
Erfassen (506) von anderen Nutzern, die an dem Point of Interest und den anderen Points of Interest innerhalb eines vorbestimmten Zeitraums registriert sind; und
Bereitstellen (508) von Information über die anderen Nutzer an den Nutzer oder Bereitstellen von Information über den Nutzer an die anderen Nutzer.

8. Verfahren nach Anspruch 7, wobei das Erfassen der anderen Points of Interest, die dem Point of Interest zugeordnet sind, folgendes umfasst:
Erfassen von mindestens einem Point of Interest, der eine Distanz zu dem Point of Interest hat, die geringer als ein vorbestimmter Bereich ist, als die anderen Points of Interest, die dem Point of Interest zugeordnet sind.

9. Verfahren nach Anspruch 7, wobei das Erfassen der anderen Points of Interest, die dem Point of Interest zugeordnet sind, folgendes umfasst:
Erfassen von mindestens einem Point of Interest aus derselben Kategorie und der eine Distanz zu dem Point of Interest hat, die geringer als ein vorbestimmter Bereich ist, als die anderen Points of Interest, die dem Point of Interest zugeordnet sind.

10. Verfahren nach Anspruch 7, wobei das Bereitstellen von Information über die anderen Nutzer an den Nutzer oder das Bereitstellen von Information über den Nutzer an die anderen Nutzer folgendes umfasst:
Bereitstellen der Information über die anderen Nutzern an den Nutzer auf einem vorbestimmten Weg, wobei die Information Nutzeridentifikationsinformation und Information über den registrierten POI umfasst; oder
Bereitstellen der Information über den Nutzer an die anderen Nutzer auf einem vorbestimmten Weg, wobei die Information Nutzeridentifikationsinformation und Information über den registrierten POI umfasst;
wobei der vorbestimmte Weg mindestens einen Weg aus Audio, Video, Text oder Kurznachricht umfasst.

11. Verfahren nach Anspruch 7, wobei das Verfahren ferner folgendes umfasst, und zwar bevor die Registrierung des Nutzers an dem Point of Interest empfangen wird:
Empfangen einer Anfrage von dem Nutzer für das Suchen von POIs;
Lokalisieren des Nutzers entsprechend der Anfrage, um die Nutzerposition zu erhalten;
Erfassen von mindestens einem Point of Interest, der die Distanz zu der Nutzerposition hat, die geringer als der vorbestimmte Bereich ist; und
Erhalten des mindestens einen Points of Interest als einen registrierbaren POI zur Rückmeldung.

12. Vorrichtung zum Bereitstellen von Nutzerinformation, wobei die Vorrichtung folgendes umfasst:
ein POI-registrierendes Modul (750), das gestaltet ist, um eine Registrierung von einem Nutzer zu erhalten;
ein erstes erfassendes Modul (760), das gestaltet ist, um andere Points of Interest zu erfassen, die dem Point of Interest zugeordnet sind;
ein nutzererfassendes Modul (770), das gestaltet ist, um andere Nutzer zu erfassen, die sich an dem Point of Interest und an den anderen Points of Interest innerhalb eines vorbestimmten Zeitraums registriert haben; und
ein informationsbereitstellendes Modul (780), das gestaltet ist, um Information über die anderen Nutzer an den Nutzer oder um Information über den Nutzer an die anderen Nutzer bereitzustellen.

13. Vorrichtung nach Anspruch 12, wobei das erste erfassende Modul (760) folgendes umfasst: eine erste POI-erfassende Einheit (762); und
wobei die erste POI-erfassende Einheit (762) gestaltet ist, um mindestens einen Point of Interest, der eine Distanz zu dem Point of Interest hat, die geringer als ein vorbestimmter Bereich ist, als die anderen Points of Interest zu erhalten, die dem Point of Interest zu geordnet sind.

14. Vorrichtung nach Anspruch 12, wobei das erste erfassende Modul (760) folgendes umfasst: eine zweite POI-erfassende Einheit (764); und
wobei die zweite POI-erfassende Einheit (764) gestaltet ist, um mindestens einen Point of Interest aus derselben Kategorie und der eine Distanz zu dem Point of Interest hat, die geringer als ein vorbestimmter Bereich ist, als die anderen Points of Interest zu erfassen, die dem Point of Interest zu geordnet sind.

15. Vorrichtung nach Anspruch 12, wobei die Vorrichtung ferner folgendes umfasst: ein anfrageempfangendes Modul (710), ein nutzerpositionslokalisierendes Modul (720), ein zweites erfassendes Modul (730) und ein Registrierungsrückmeldungsmodul (740);
wobei das anfrageempfangende Modul (710) gestaltet ist, um eine Anfrage von dem Nutzer für das Suchen von POIs zu empfangen;
das nutzerpositionslokalisierende Modul (720) gestaltet ist, um den Nutzer entsprechend der Anfrage zu lokalisieren, um die Nutzerposition zu erhalten;
das zweite erfassende Modul (730) gestaltet ist, um mindestens einen Point of Interest erhalten, der eine Distanz zu der Nutzerposition hat, die geringer als ein vorbestimmter Bereich ist; und
das Registrierungsrückmeldungsmodul (740) gestaltet ist, um den mindestens einen Point of Interest als einen registrierbaren POI zur Rückmeldung zu erhalten.

## Revendications

1. Procédé de production d'informations sur un utilisateur, comprenant les opérations consistant à :
acquérir (102) des informations sur la position d'un utilisateur ;
acquérir (104) un point d'intérêt associé à la position de l'utilisateur ;
acquérir 106) d'autres utilisateurs qui se sont enregistrés sur le point d'intérêt sur une période prédéterminée ; et
produire (108) à l'utilisateur des informations sur les autres utilisateurs.

2. Procédé selon la revendication 1, dans lequel l'acquisition du point d'intérêt associé à la position de l'utilisateur comprend l'opération consistant à :
acquérir au moins un point d'intérêt, se trouvant à une distance inférieure à un rayon prédéterminé par rapport à la position de l'utilisateur, en tant que point d'intérêt associé à la position de l'utilisateur.

3. Procédé selon la revendication 1, dans lequel la production à l'utilisateur des informations sur les autres utilisateurs comprend les opérations consistant à :
produire à l'utilisateur les informations sur les autres utilisateurs par un moyen prédéterminé ;
les informations comportant des informations d'identification d'utilisateur et des informations enregistrées sur des points d'intérêt ; et
le moyen prédéterminé comprenant l'un au moins des moyens suivants, incluant un message audio, un message vidéo, un message texte, et un message court.

4. Procédé selon l'une quelconque des revendications 1 à 3, dans lequel l'enregistrement comprend l'opération consistant à : associer les informations d'identification d'utilisateur, l'instant d'enregistrement et les informations enregistrées sur des points d'intérêt d'un utilisateur incitant enregistrement pour générer des informations d'enregistrement.

5. Dispositif de production d'informations sur un utilisateur, comprenant :
un module d'acquisition de position (410), configurée pour acquérir des informations sur la position d'un utilisateur ;
un module d'acquisition de point d'intérêt (420), configuré pour acquérir un point d'intérêt associé à la position de l'utilisateur ;
un module d'acquisition d'utilisateurs (430), configuré pour acquérir d'autres utilisateurs qui ont effectués enregistrement pour le point d'intérêt sur une période prédéterminée ;
un module de production d'informations (440), configuré pour produire à l'utilisateur des informations sur les autres utilisateurs ;
l'enregistrement comprenant les opérations consistant à : associer les informations d'identification d'utilisateur, l'instant d'enregistrement, et les informations enregistrées sur des points d'intérêt d'un utilisateur incitant enregistrement pour générer des informations d'enregistrement.

6. Dispositif selon la revendication 5, dans lequel le module d'acquisition de point d'intérêt (420) comprend :
une première unité d'acquisition (422) ;
la première unité d'acquisition (422) étant configurée pour acquérir au moins un point d'intérêt, se trouvant à une distance inférieure à un rayon prédéterminé par rapport à la position de l'utilisateur, en tant que point d'intérêt associé à la position de l'utilisateur.

7. Procédé de production d'informations sur un utilisateur, comprenant les opérations consistant à :
recevoir (502) l'enregistrement d'un utilisateur pour un point d'intérêt ;
acquérir (504) d'autres points d'intérêt associés au point d'intérêt ;
acquérir (506) d'autres utilisateurs enregistrés pour le point d'intérêt et les autres points d'intérêt sur une période prédéterminée ; et
produire (508) à l'utilisateur des informations sur les autres utilisateurs, ou produire aux autres utilisateurs des informations sur l'utilisateur.

8. Procédé selon la revendication 7, dans lequel l'acquisition des autres points d'intérêt associés au point d'intérêt comprend l'opération consistant à :
acquérir au moins un point d'intérêt, se trouvant à une distance inférieure à un rayon prédéterminé par rapport au point d'intérêt, en tant que les autres points d'intérêt associés au point d'intérêt.

9. Procédé selon la revendication 7, dans lequel l'acquisition des autres points d'intérêt associés au point d'intérêt comprend l'opération consistant à :
acquérir au moins un point d'intérêt, appartenant à la même catégorie et se trouvant à une distance inférieure à un rayon prédéterminé par rapport au point d'intérêt, en tant que les autres points d'intérêt associés au point d'intérêt.

10. Procédé selon la revendication 7, dans lequel la production à l'utilisateur des informations sur les autres utilisateurs, ou la production aux autres utilisateurs des informations sur l'utilisateur comprend les opérations consistant à :
produire à l'utilisateur des informations sur les autres utilisateurs par un moyen prédéterminé, les informations comportant des informations d'identification d'utilisateur et des informations enregistrées sur des points d'intérêt ;
ou, produire aux autres utilisateurs des informations sur l'utilisateur par un moyen prédéterminé, les informations comportant des informations d'identification d'utilisateur et des informations enregistrées sur des points d'intérêt ;
le moyen prédéterminé comportant au moins un message audio, un message vidéo, un message texte, et un message court.

11. Procédé selon la revendication 7, comprenant en outre, avant réception de l'enregistrement de l'utilisateur sur le point d'intérêt, les opérations consistant à :
recevoir une requête de l'utilisateur sur la recherche de points d'intérêt ;
localiser l'utilisateur en fonction de la requête pour obtenir la position de l'utilisateur ;
acquérir au moins un point d'intérêt se trouvant à la distance inférieure au rayon prédéterminé par rapport à la position de l'utilisateur ; et
obtenir en retour l'au moins un point d'intérêt en tant que point d'intérêt enregistrable.

12. Dispositif pour produire des informations d'utilisateur, comprenant :
un module d'enregistrement de point d'intérêt (750), configuré pour recevoir un enregistrement d'un utilisateur ;
un premier module d'acquisition (760), configuré pour acquérir d'autres points d'intérêt associés au point d'intérêt ;
un module d'acquisition d'utilisateur (770), configuré pour acquérir d'autres utilisateurs qui se sont enregistrés pour le point d'intérêt et les autres points d'intérêt sur une période prédéterminée ; et
un module de production d'informations (780), configuré pour produire à l'utilisateur des informations sur les autres utilisateurs, ou pour produire aux autres utilisateurs des informations sur l'utilisateur.

13. Dispositif selon la revendication 12, dans lequel le premier module d'acquisition (760) comprend : une première unité d'acquisition de points d'intérêt (762) ; et
la première unité d'acquisition de points d'intérêt (762) est configurée pour obtenir au moins un point d'intérêt, se trouvant à une distance inférieure à un rayon prédéterminé par rapport au point d'intérêt, en tant que les autres points d'intérêt associés au point d'intérêt.

14. Dispositif selon la revendication 12, dans lequel le premier module d'acquisition (760) comprend : une seconde unité d'acquisition de points d'intérêt (764) ; et
la seconde unité d'acquisition de points d'intérêt (764) est configurée pour acquérir au moins un point d'intérêt, appartenant à la même catégorie et se trouvant à une distance inférieure à un rayon prédéterminé par rapport au point d'intérêt, en tant que les autres points d'intérêt associés au point d'intérêt.

15. Dispositif selon la revendication 12, comprenant en outre : un module de réception de requêtes (710), un module de localisation de position d'utilisateur (720), un second module d'acquisition (730), et un module de retour d'enregistrement (740) ;
le module de réception de requêtes (710) étant configuré pour recevoir une requête de l'utilisateur sur la recherche de points d'intérêt ;
le module de localisation de position d'utilisateur (720) étant configuré pour localiser l'utilisateur en fonction de la requête pour obtenir la position de l'utilisateur ;
le second module d'acquisition (730) étant configuré pour obtenir au moins un point d'intérêt, se trouvant à une distance inférieure au rayon prédéterminé par rapport à la position d'utilisateur ; et
le module de retour d'enregistrement (740) étant configuré pour obtenir en retour au moins un point d'intérêt en tant que point d'intérêt enregistrable.
